# EUROPEAN PATENT APPLICATION

(11) **EP 4 520 763 A1**
(43) Date of publication of application: **12.03.2025**
(21) Application number: 23196238.2
(22) Date of filing: 08.09.2023
(51) Int. Cl.: C07F 9/09

(54) **NEW SHINE ADDITIVES FOR CLEANING AND/OR CARE FORMULATIONS**

(71) Applicant: Evonik Operations GmbH, 45128 Essen (DE)
(72) Inventor: TRAMBITAS, Alexandra, 63755 Alzenau (DE); SCHUBERT, Frank, 47506 Neukirchen-Vluyn (DE); SEIDEL, Kurt, 63637 Jossgrund (DE)
(74) Representative: Evonik Patent Association

(57) **Abstract**

The present invention relates to new phosphoric acid esters of polyether-modified aryl alcohols as well as their salts, to their preparation and to their use for generating shine on a surface.

## Description

The present invention relates to new phosphoric acid esters of polyether-modified aryl alcohols as well as their salts, to their preparation and to their use for generating shine on a surface.

### Field of the invention

Conventional shine additives for cleaning formulations for hard surfaces which are based on additions of wax/acrylic polymers do not assist cleaning. Such a combination leaves behind a solid film which, firstly, seals the surface and, secondly, can lead to visible tread marks as a result of various mechanical demands. Uneven surfaces are smoothed as a result, and although shine is generated, the surface is also visibly altered in terms of its nature. In most cases, particularly more matt or structured surfaces treated herewith look painted and not freshened up and as new.

Several approaches are reported in the art that tackle this problem.

EP 0 940 406 A2 discloses certain phosphoric acid esters and their use as dispersants for pigments of fillers. In particular, it relates to
a) phosphoric acid esters which are obtainable by reaction of an ω-hydroxy-functional oligo- or poly(alkyl)styrene with an alkylene oxide to give a poly(alkyl)styrene-block(b)-polyalkylene oxide copolymer and subsequent conversion to the corresponding phosphoric acid esters with a phosphoric-acid-ester-forming phosphorus compound, where up to 100 % of the terminal hydroxyl groups of these poly(alkyl)styrene-block(b)-polyalkylene oxide copolymers are converted to phosphoric acid ester groups and the phosphorus atoms are mono- and/or diesterified depending on the selected stoichiometric ratios, and
b) phosphoric acid esters based on polystyrene oxide-block(b)-polyalkylene oxide copolymers which are obtainable starting from a monofunctional starting alcohol by sequential addition of styrene oxide and an alkylene oxide according to the desired sequence and chain length of individual segments. These intermediates are subsequently converted to the corresponding phosphoric acid esters, in the same manner as described in a).

EP 2 778 170 A1 discloses phosphoric acid esters of polyether-modified alkyl alcohols, a method for their preparation and their use for generating shine on a surface. The phosphoric acid esters of EP 2 778 170 A1 have commercial disadvantages because three or more monomers are necessary to produce the polyether-modified alkyl alcohols. One of these monomers is styrene, similarly as for the phosphoric acid esters disclosed in EP 0 940 406 A2.

EP 1 167 452 A2 and EP 1 685 895 A2 describe the use of particular phosphoric acid esters which are based on polystyrene block(b)-polyalkylene oxide copolymers as emulsifiers and dispersants for pigments and fillers.

DE 10 2016 225 903 A1 discloses further phosphoric acid esters containing polyethers based on styrene oxide and optionally further alkylene oxides (ethylene oxide, propylene oxide, and/or butylene oxide). These phosphoric acid esters may be used as shine additives.

While the prior art discloses phosphoric acid esters as additives for improving shine ability (i.e. "shining"), there is still a need in the market for new shine additives and new care and cleaning formulations, particularly cleaning formulations for hard surfaces.

It was therefore an object of the invention to provide new shine additives as well as new care and/or cleaning formulations, especially for hard surfaces, which do not show some or all of the deficiencies of the prior art products.

A particular object of the invention was to provide new shine additives that fully or in part level fine scratches on surfaces, especially on hard surfaces, and are able to generate shine without causing a painted look of the surface.

Another particular problem to be solved by the invention was to provide new shine additives and new cleaning formulations that are flexible in use, i.e. that can be used on various surfaces, especially hard surfaces, dry quickly and/or show good sheeting.

Another problem was to provide new shine additives that can be formulated easily into care and/or cleaning formulations.

It was also a problem to provide new shine additives, that can be produced more economically compared to the prior art.

The new shine additives should preferably show low foaming, be non-corrosive and/or be able to refresh surfaces, i.e. make surfaces look like new surfaces.

The new shine additives should preferably be effective in a low concentration in a cleaning formulation.

### Description of the Invention

Surprisingly, it has now been found that the phosphoric acid esters of polyether-modified aryl alcohols of Formula **(I)**, as defined in the claims and the description below, solve the problems of the invention.

The shine additives of the present invention comprise aryl groups at the beginning of the polyether polymer main chain, i.e. the aryl groups are part of the polymer main chain. Shine additives of the prior art, comprising styrene oxide monomers in the polymer main chain, in contrast thereto, comprise aryl groups, which are attached at a side of the polyether polymer main chain.

As consequence, the polyether chains of the phosphoric acid esters of the present invention may have a simplified structure compared to prior art shine additives disclosed in EP 2 778 170 A1 and DE 10 2016 225 903 A1. Inventors surprisingly found, that using polyethers with aryl groups as starting group, solve the problems of the invention, even if the rest of the polyether main chains is made of ethylene oxide, only. The shine additives of the present invention, therefore, have commercial benefits compared to the polyether chains of the additives disclosed in EP 2 778 170 A1 and DE 10 2016 225 903 A, which polyether chains must comprise at least ethylene oxide, styrene oxide and an alkoxy residue as starting group.

Further advantages of the shine additives of the present invention are as follows:
- They do not leave behind any greasy or iridescent effect on the surface.
- They may be used efficiently in hard water, i.e. water with a high (> 2.5 mmol/l) concentration of alkaline metal ions and alkaline earth metal ions.
- They reduce spotting on surfaces upon drying of formulations.
- They are very stable in aqueous, in particular surface-active, formulations.
- They may be incorporated readily into aqueous formulations without decisively influencing advantageous properties of the aqueous formulations.

The benefits described before are achieved with the phosphoric acid esters of the invention as well as with their salts.

### Phosphoric Acid Esters and their Salts

The present invention hence relates to a phosphoric acid ester according to general formula **(I)** or a salt thereof 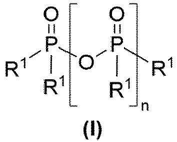
where n is an integer and n = 0 to 4, preferably n = 0 to 3, more preferably n = 0 to 2, even more preferably n = 0 to 1,
and where the residues R¹ are selected from the group consisting of hydroxy and residues according to general formula **(I')**, 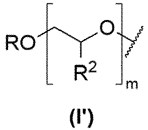
with the proviso that at least one, preferably one to n + 2, more preferably one to n + 1, of the residues R¹ which are comprised by the phosphoric acid ester according to general formula **(I)** is a residue according to general formula **(I')**,
and where the residues R¹ according to general formula **(I')** which are comprised by the phosphoric acid ester according to general formula **(I)** may be identical or different from each other,
where m is an integer and m = α + β + γ,
wherein
α is an integer and α = 3 to 20, preferably 4 to 18, and
β is an integer and β = 0 to 10, preferably 0 to 8, more preferred 0 to 5, even more preferred 0 to 3 and most preferred 0, and
γ is an integer and γ = 0 to 10, preferably 0 to 8, more preferred 0 to 5, even more preferred 0 to 3 and most preferred 0, and
and wherein α of the residues R² that are comprised by the residue according to general formula **(I')** are each hydrogen,
and wherein β of the residues R² that are comprised by the residue according to general formula **(I')** are each methyl,
and wherein γ of the residues R² that are comprised by the residue according to general formula **(I')** are each ethyl,
and where R is a mono- or polycyclic aromatic radical with 3 to 36, more preferably 6 to 36, more preferably 6 to 30, more preferably 6 to 24, even more preferably 6 to 20, even more preferably 6 to 16, even more preferably 6 to 10 aromatic carbon atoms, which optionally contains hetero atoms,
wherein one or more of the aromatic carbon atoms of the mono- or polycyclic aromatic radical may be substituted with a hydrocarbon radical having 1 to 24, preferably 1 to 18, more preferably 1 to 15, carbon atoms, wherein the hydrocarbon radical is preferably selected from the group consisting of alkyl, alkenyl, aryl, aralkyl, alkaryl, even more preferably selected from the group consisting of alkyl, aryl, alkylaryl and arylalkyl.

An advantageous embodiment of the present invention is a mixture comprising at least two, preferably at least three, even more preferably at least four, even more preferably at least five, even more preferably at least ten, even more preferably at least twenty, even more preferably at least a hundred, different phosphoric acid esters according to the general formula **(I)** or salts thereof.

The present invention further provides a process for preparing the phosphoric acid esters according to the invention.

The phosphoric acid esters according to the invention and its salts as well as mixtures and formulations which comprise at least one of the phosphoric acid esters according to the invention and/or its salts respectively, are described below by way of example without intending to limit the invention to these exemplary embodiments.

In those embodiments of the invention where in the phosphoric acid esters according to general formula **(I)**, β > 0 and/or γ > 0, the distribution of the monomer units **EO** (i.e. those units -CH₂CHR²-O- where R² = H), **PO** (i.e. those units -CH₂CHR²-O- where R² = methyl) and/or **BO** (i.e. those units -CH₂CHR²-O- where R² = ethyl) in the resulting polyether chain, i.e. in the respective residues according to general formula **(I')**, is not specifically limited. The different units of **EO, PO** and/or **BO** may be distributed in the respective residues according to general formula **(I')** in a statistical distribution or as blocks of each monomers, preferably in a statistical distribution.

Data relating to the average number of units **EO, PO** and **BO** in a mixture of phosphoric acid esters according to general formula **(I)** or their salts is to be understood as meaning the respective number that is averaged over all of the corresponding compounds. All of the stated percentages (%) are percentages by mass, unless stated otherwise.

A "monocyclic aromatic radical, which optionally contains hetero atoms" is a radical wherein all carbon atoms and the optional hetero atoms form only one aromatic ring and are part of the aromatic system.

A "polycyclic aromatic radical, which optionally contains hetero atoms" is a radical wherein all carbon atoms and the optional hetero atoms form two or more aromatic rings and are part of the aromatic system, wherein every aromatic ring in the polycyclic aromatic radical is fused to at least one other aromatic ring. "Fused" means that in the radical, there are at least two aromatic rings that share at least two carbon atoms, at least two hetero atoms or at least one carbon atom and one hetero atom with each other.

Hetero atoms are preferably selected from N, S, Se, O, even more preferably selected from N, S, O, even more preferably selected from N.

In a preferred embodiment, R is a hydrocarbon mono- or polycyclic aromatic radical with 3 to 36, more preferably 6 to 36, more preferably 6 to 30, more preferably 6 to 24, even more preferably 6 to 20, even more preferably 6 to 16, even more preferably 6 to 10 aromatic carbon atoms.

Depending on the pH of the surroundings around the phosphoric acid esters or mixture of phosphoric acid esters according to the invention, the phosphoric acid esters according to the invention can also be present in partially or completely neutralized form as salts. Counterions which may be mentioned in such an embodiment include alkali metal and alkaline earth metal ions, and ammonium ions, wherein the ammonium ions may be unsubstituted or substituted, in particular with alkyl groups or alkyl groups containing ester groups or alkyl groups containing ether groups.

The phosphoric acid esters according to general formula **(I)** that are particularly preferred are those in which α = 3 to 20 and β = γ = 0, and most preferred those in which α = 4 to 18 and β = γ = 0.

Particularly preferred phosphoric acid esters according to general formula **(I)** or their salts are those in which R is selected from the group consisting of
- a phenyl radical,
- a naphthyl radical,
- a naphthyl radical, which is substituted with at least one, preferably one to three, more preferably one or two, even more preferably one, radical(s) A_{N}, wherein the radicals A_{N} are the same or different from each other,
   and wherein each radical A_{N} is a hydrocarbon radical with 1 to 24 carbon atoms, preferably 4 to 15 carbon atoms, and wherein each radical A_{N} is preferably selected from the group consisting of alkyl, alkenyl, aryl, aralkyl, alkaryl,
- a phenyl radical, which is substituted with at least one, preferably one to five, more preferably one to four, even more preferably one to three, even more preferably one or two, even more preferably one, radical(s) A_{P},
   wherein the radicals A_{P} are the same or different from each other,
   and wherein each radical A_{P} is a hydrocarbon radical with 1 to 24 carbon atoms, preferably 4 to 15 carbon atoms, wherein the hydrocarbon radical is preferably selected from the group consisting of alkyl, alkenyl, aryl, aralkyl, alkaryl, more preferably alkenyl, alkaryl.

Even more preferred phosphoric acid esters according to general formula **(I)** or their salts are those in which R is selected from the group consisting of formulae **(II)**, **(III)**, **(IV)**, wherein 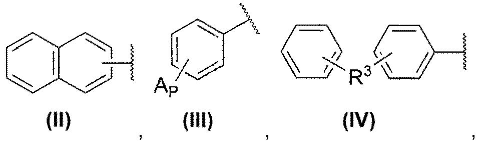
wherein A_{P} is an alkyl radical with 1 to 24 carbon atoms, preferably 4 to 15 carbon atoms, or an alkenyl radical with 1 to 24 carbon atoms, preferably 4 to 15 carbon atoms, wherein the alkenyl radical preferably comprises one to three double bonds,
wherein R³ is a divalent, linear or branched, preferably linear, hydrocarbon radical, most preferred an alkylene group with 1 to 6 preferably 1 to 3 carbon atoms or an alkenylene group with 2 to 6, preferably 2 or 3 carbon atoms.

Even more preferred phosphoric acid esters according to general formula **(I)** or their salts are those in which R is selected from the group consisting of 2-naphthyl, 4-cumylphenyl, cardanol, preferably cardanol obtained from cashew nut shell liquid.

In those embodiments where R = cardanol, it is preferred that R has a structure according to formula **(V):**

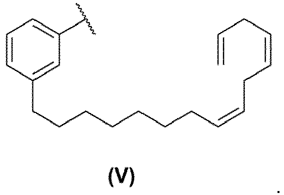

An advantageous embodiment of the present invention is a mixture comprising at least two, preferably at least three, even more preferably at least four, even more preferably at least five, even more preferably at least ten, even more preferably at least twenty, even more preferably at least a hundred, different phosphoric acid esters according to the general formula **(I)** or salts thereof.

It is even more preferred, if, in this advantageous embodiment, the radical R comprised by at least two, preferably at least three, preferably at least four of the phosphoric acid esters or their salts in the mixture are different from each other. Even more preferred, the mixture then comprises phosphoric acid esters according to the general formula **(I)** or salts thereof wherein R is selected from the group consisting of formulae **(III)**, wherein A_{P} is an alkyl radical with 4 to 24 carbon atoms, wherein some, for example 2 %, of these alkyl radicals are saturated, some, for example 34 %, of these alkyl radicals are mono-unsaturated, some, for example 22 %, of these alkyl radicals are bi-unsaturated, and some, for example 41 %, of these alkyl radicals are tri-unsaturated.

Phosphoric acid esters preferred according to the invention are characterized in that they are not water-soluble. In connection with the present invention, the term "water-soluble" is to be understood as meaning that a substance can dissolve in pure water at 20 °C to a maximum of 1 % by weight, preferably 0.5 % by weight, particularly preferably 0.1 % by weight, with the % by weight referring to the sum of water and tested substance.

### Process for Preparing Phosphoric Acid Esters

The phosphoric acid esters according to the invention can be prepared by processes known to a person skilled in the art. See, for example, the process disclosed in EP 0 940 406 A2.

Preferably, the phosphoric acid esters according to the invention are prepared by the process according to the invention described below. Essentially, the process according to the invention comprises alkoxylation steps. Appropriate directions for carrying out alkoxylations can be found by a person skilled in the art in, for example, DE 100 54 462 A1, WO 92/12950 A1 and WO 2005/026273 A1.

The process of the present invention for preparing at least one phosphoric acid ester according to general formula **(I)** or its salt, preferably for preparing at least one phosphoric acid ester according to general formula **(I)**, comprises the steps of:
A) providing at least one alcohol R-OH, where R is defined as stated above,
B) reacting ethylene oxide and optionally at least one further reactant selected from propylene oxide, butylene oxide, with the alcohol R-OH, wherein the molar ratio of the amount of ethylene oxide employed in step B) to the amount of all alcohols R-OH provided in step A) is in the range of from 3 : 1 to 20 :1, preferably of from 4 : 1 to 18 : 1, more preferably of from 10 : 1 to 15 : 1,
   wherein the reaction in step B) is preferably carried out at a temperature in a range of from 80 °C to 180 °C, preferably of from 100 °C to 160 °C, more preferably of from 110 °C to 150 °C, even more preferably of from 110 °C to 140 °C,
   wherein the reaction in step B) is preferably carried out at a pressure in a range of from 0.5 bar to 12.0 bar, preferably of from 0.6 bar to 10.0 bar, more preferably of from 0.8 bar to 8.0 bar, even more preferably of from 0.8 bar to 6.0 bar,
   wherein in those cases where propylene oxide is employed as further reactant in step B), the molar ratio of the amount of propylene oxide employed in step B) to the amount of all alcohols R-OH provided in step A) is in the range of from > 0 : 1 to 10 :1, preferably of from 0.001 : 1 to 8 : 1, preferably of from 0.01 : 1 to 5 : 1, preferably of from 0.1 : 1 to 3 : 1,
   wherein in those cases where butylene oxide is employed as further reactant in step B), the molar ratio of the amount of butylene oxide employed in step B) to the amount of all alcohols R-OH provided in step A) is in the range of from > 0 : 1 to 10 :1, preferably of from 0.001 : 1 to 8 : 1, preferably of from 0.01 : 1 to 5 : 1, preferably of from 0.1 : 1 to 3 : 1,
C) reacting at least one polyphosphoric acid H_{q+2}P_{q}O_{3q+1}, wherein q is an integer and q ≥ 2, preferably q = 2 to 100, more preferably q = 2 to 10, with the reaction mixture obtained in step B),
   wherein the molar ratio of the amount of all PzOs equivalents in the polyphosphoric acids employed in step C) to the amount of all alcohols R-OH provided in step A) is in the range of from 0.1 : 1 to 1 :1, preferably of from 0.1 : 1 to 0.5 : 1, more preferably of from 0.2 : 1 to 0.3 : 1,
   wherein the reaction in step C) is preferably carried out at a temperature in a range of from 50 °C to 130 °C, more preferably in the range of from 60 °C to 110 °C, even more preferably in the range of from 70 °C to 100 °C,
   wherein the reaction in step C) is preferably carried out at a pressure in a range of from 0.4 bar to 1.2 bar, preferably in a range of from 0.6 bar to 1 bar,
   so that at least one phosphoric acid ester is obtained,
D) optionally purifying the at least one phosphoric acid ester

In those embodiments wherein at least one of propylene oxide, butylene oxide is employed in step B), the sequence of addition of ethylene oxide, propylene oxide and/or butylene oxide to the reaction mixture is not limited. Ethylene oxide, propylene oxide and/or butylene oxide can therefore be reacted simultaneously to give statistically distributed chains of **EO, PO** and/or **BO,** or sequentially to give chains where **EO, PO** and/or **BO** are distributed statistically.

Propylene oxide is 1,2-epoxy propane.

Butylene oxide is 1,2-epoxy butane.

Hence, ethylene oxide, propylene oxide and/or butylene oxide may be added individually in pure form or alternately one after the other in any dosing sequence, or simultaneously as mixture. It is also possible that blocks of **EO, PO** and/or **BO** are used.

In other words, for those phosphoric acid esters according to general formula **(I)** for which β > 0 and/or γ > 0, the sequence of the monomer units **EO, PO** and/or **BO** in the resulting polyether chain may distributed statistically or in block, preferably statistically.

In process step B) of the process according to the invention, the alkoxylation preferably takes place in the presence of catalysts, preferably basic (alkaline) catalysts such as alkali metal methanolates, sodium hydroxide and/or potassium hydroxide. Particular preference is given to potassium hydroxide, sodium and potassium methanolate, which are used preferably in an advantageous manner in catalyst amounts of from 0.1 to 5.0 % by weight, preferably 0.2 to 0.8 % by weight, calculated as solid and based on the resulting reaction product.

It is advantageous and therefore preferred to carry out the process according to the invention water-free and/or solvent-free, preferably water-free, more preferably water-free and solvent-free.

The term "water-free" is used in present invention to denote an amount of less than 0.5 % by weight of water, based on the total reaction mixture.

The term "solvent-free" is used in present invention to denote an amount of less than 0.5 % by weight of any solvent different from water, based on the total reaction mixture.

It is preferred in step B) to react ethylene oxide with the alcohol R-OH, wherein the molar ratio of the amount of ethylene oxide employed in step B) to the amount of all alcohols R-OH provided in step A) is in the range of from 3 : 1 to 20 :1, preferably of from 4 : 1 to 18 : 1,
wherein the reaction in step B) is preferably carried out at a temperature in a range of from 80 °C to 180 °C, preferably of from 100 °C to 160 °C, more preferably in a range of from 110 °C to 150 °C, even more preferably 110 °C to 140 °C,
wherein the reaction in step B) is preferably carried out at a pressure in a range of from 0.5 bar to 12.0 bar, preferably of from 0.6 bar to 10.0 bar, more preferably of from 0.8 bar to 8.0 bar, even more preferably 0.8 bar to 6.0 bar.

In this preferred embodiment, it is even more preferred to not react propylene oxide and butylene oxide, i.e. to react ethylene oxide in step B), but not propylene oxide, and not butylene oxide

The phosphoric acid esters according to general formula **(I)** or mixtures thereof that can be prepared by the process according to the invention are likewise provided by the present invention.

The phosphoric acid esters that can be prepared by the process according to the invention can constitute mixtures of phosphoric acid esters according to general formula **(I)** .

### Formulation comprising one or more Phosphoric Acid Esters

The present invention further provides a formulation, preferably a cleaning and/or care formulation, comprising one or more phosphoric acid ester of general formula **(I)** and/or its salts. Preferably used are phosphoric acid esters or mixtures thereof, which are described as preferred embodiments above.

It is preferred according to the invention that the amount of all phosphoric acid esters according to formula **(I)** in the formulation is in a range of from 0.00001 % by weight to 2.5 % by weight, particularly preferably in a range of from 0.1 % by weight to 1.2 % by weight, where the % by weight refers to the total weight of the formulation.

Cleaning and care formulations according to the invention are in particular aqueous formulations, where the term "aqueous" is understood as meaning a water content of at least 30 weight-%, preferably at least 80 weight-%, particularly preferably at least 98 weight-% of water, based on the weight of the total formulation.

Preference is given to aqueous care and cleaning formulations which, besides the phosphoric acid esters of the general formula **(I)** or their salts, preferably comprises at least one surfactant, in which case, for example, anionic, nonanionic, cationic and/or amphoteric surfactants may be present. The total surfactant content of the aqueous formulation is preferably 0.1 to 40 % by weight and particularly preferably 0.1 to 12.0 % by weight, based on the weight of the total formulation.

Particularly preferred formulations according to the invention comprise, as phosphoric acid esters the phosphoric acid esters according to the invention of the general Formula I and/or the phosphoric acid esters which can be prepared by the process according to the invention, where the preferred embodiments of the aforementioned subjects according to the invention are present in the formulations according to the invention.

### Method of Treating an Article

The present invention also relates to a method of treating, preferably cleaning, an article, said method comprising applying at least one phosphoric acid ester according to general formula **(I)** and/or its salts to a surface of said article. The method also comprises applying at least one formulation as defined above to a surface of said article.

In a preferred embodiment, the surface is a hard surface, preferably a surface of a vehicle, a watercraft, an aeroplane, a window pans and sill, a shower divider, a flooring, such as a carpet, a tile, a laminate, a parquet, a cork flooring, marble, stone and fine stoneware floors, sinks made from ceramic or stainless steel, a household ceramic such as a toilet, a wash basin, a bidet, a shower tray, a bathtub, a door handle, a fitting, a surface of furniture such as a table, a chair, a bench, a worktop, a window, a pot and a pan, crockery and cutlery, a surface of tools such as of a surgical instrument, a vacuum cleaner, an engine, a pipelines, a tank and a device for transportation, processing and storage in food processing.

### Uses of one or more Phosphoric Acid Esters

The present invention further provides the use of at least one phosphoric acid ester according to general formula **(I)** and/or its salts to treat a surface of an article and/or in domestic appliances such as washing machines, dryers, dishwashers, preferably for generating shine on a surface.

The present invention further provides the use of at least one formulation as defined above to treat a surface of an article and/or in domestic appliances such as washing machines, dryers, dishwashers, preferably for generating shine on a surface.

The present invention further provides the use of at least phosphoric acid ester obtainable by the process according to the invention as defined above to treat a surface of an article and/or in domestic appliances such as washing machines, dryers, dishwashers, preferably for generating shine on a surface.

For the use according to the invention, paper is preferably excluded.

The use according to the invention on surfaces is suitable particularly for vehicles, watercrafts, aeroplanes, window panes and sills, shower dividers, floorings such as carpets, tiles, laminates, parquet, cork flooring, marble, stone and fine stoneware floors, household ceramics such as a toilet, wash basins, bidets, shower trays, bathtubs, door handles, fittings, domestic appliances such as washing machines, dryers, dishwashers, sinks made from ceramic or stainless steel, furniture such as tables, chairs, benches, worktops, windows, pots and pans, crockery and cutlery, tools such as surgical instruments, vacuum cleaners, engines, pipelines, tanks and devices for transportation, processing and storage in food processing.

### Analytical Methods

### GPC Measurements:

GPC measurement is used to determine the polydispersity M_{w}/Mₙ and the average molecular weight M_{w} of the polyether polymers. The measurement is done as follows: Column combination SDV 1000/10000 Å (length 65 cm), temperature 30 °C, tetrahydro furane ("**THF**") as mobile phase, flow rate 1 ml/min, sample concentration 10 g/l, RI detector, use of propylene glycol standard.

### Acid number:

The determination of the acid number is carried out via a titration method based on DIN EN ISO 2114.

### OH-number

OH-numbers are determined according to the method DGF C-V 17 a (53) of the German Society for Fat Science ("*Deutsche Gesellschaft für Fettwissenschaft*"). In this methods the samples are reacted with acetic acid anhydride in the presence of pyridine and the consumption of acetic acid anhydride is determined via titration with 0.5 N KOH in ethanol against phenolphthalein.

### Examples

### Step 1: Preparation of Polyether via Alkoxylation

### Example 1.1: Preparation of a polyether from 2-naphthol and ethylene oxide

432.6 g (3 mol) solid 2-naphthol were placed into a 3 I autoclave together with 5.04 g KOH, under an inert nitrogen atmosphere, and heated to 140 °C. After melting, the internal reactor pressure was lowered to 20 mbar in order to remove any volatile components by distillation. Subsequently, 1853 g (42 mol) ethylene oxide were added, under continuous stirring and cooling, within 2 h at 140 °C and a maximum internal reactor pressure (absolute) of 3.5 bar. The reaction mixture was held at 140 °C for another 30 minutes. Thereafter, volatile components such as remaining ethylene oxide were removed under vacuum. The product was cooled to a temperature below 100 °C, lactic acid (90 % in water) was added until an acid number of 0.1 mg KOH/g was reached and passed through a filter. The liquid product had an OH-number of 88.0 mg KOH/g, an average molecular weight M_{w} of 740 g/mol und a polydispersity M_{w}/Mₙ of 1.08.

### Example 1.2: Preparation of a polyether from 4-cumylphenol and ethylene oxide

636.9 g (3 mol) solid 4-cumylphenol were placed into a 3 I autoclave together with 4.56 g KOH, under an inert nitrogen atmosphere, and heated to 130 °C. After melting, the internal reactor pressure was lowered to 20 mbar in order to remove any volatile components by distillation. Subsequently, 1452 g ethylene oxide (33 mol) were added, under continuous stirring and cooling, within 2 h at 130 °C and a maximum internal reactor pressure (absolute) of 3.5 bar. The reaction mixture was held at 130 °C for another 30 minutes. Thereafter, volatile components such as remaining ethylene oxide were removed under vacuum. The product was cooled to a temperature below 100 °C, lactic acid (90 % in water) was added until an acid number of 0.2 mg KOH/g was reached and passed through a filter. The liquid product had a OH-number of 84.2 mg KOH/g, an average molecular weight M_{w} of 640 g/mol und a polydispersity M_{w}/Mₙ of 1.08.

### Example 1.3: Preparation of a polyether from cashew nut shell liquid with ethylene oxide

336 g cashew nut shell liquid (Cardolite NC-700 of company Cardolite) was placed into a 1.5 I autoclave together with 4.2 g KOH, under an inert nitrogen atmosphere, and heated to 115 °C. After melting, the internal reactor pressure was lowered to 20 mbar in order to remove any volatile components by distillation. Subsequently, 560 g (12.7 mol, 10 mol equivalents with respect to the cardanol) ethylene oxide were added, under continuous stirring and cooling, within 3 h at 115 °C and a maximum internal reactor pressure (absolute) of 3.2 bar. The reaction mixture was held at 115 °C for another 30 minutes. Thereafter, volatile components like remaining ethylene oxide were removed under vacuum. The product was cooled to a temperature below 100 °C, lactic acid (90 % in water) was added until an acid number of 0.2 mg KOH/g was reached and passed through a filter. The liquid, brownish product had a OH-number of 96.6 mg KOH/g.

### Step 2: Synthesis of the phosphoric acid esters

### Example 2.1: Synthesis of a phosphoric acid ester comprising the polyether of Example 1.1

A 1 litre three-neck round-bottom flask with stirrer and reflux condensor was charged with 400 g of the polyether according to Example 1.1. Thereafter, the equipment and the polyether were inerted by passing over nitrogen, and the content of the flask was heated to 100 °C under stirring. Via a dropping funnel 52.4 g of polyphosphoric acid (85 % PzOs), preheated to 60 °C, were added under vigorous stirring within 30 min. Stirring of the reaction mixture at 100 °C was continued for 4 h. The brownish phosphoric acid ester was cooled to a temperature below 60 °C and bottled. In the following, it is abbreviated as **"PE 2.1".**

### Example 2.2: Synthesis of a phosphoric acid ester comprising the polyether of Example 1.2

Example 2.1 was repeated with the amendments that 400 g of the polyether according to Example 1.2 were reacted with 50.1 g of polyphosphoric acid (85% P₂O₅) to obtain a brownish and liquid product. In the following, it is abbreviated as **"PE 2.2".**

### Example 2.3: Synthesis of a phosphoric acid ester comprising the polyether of Example 1.3

Example 2.1 was repeated with the amendments that 375 g of the polyether according to Example 1.3 were reacted with 53.6 g of polyphosphoric acid (85% P₂O₅) to obtain a brownish and liquid product. In the following, it is abbreviated as **"PE 2.3".**

### Preparation of phosphoric acid esters (not according to the invention)

For comparison, two phosphoric acid esters with polyether-modified aliphatic alcohols were prepared. These compounds were produced as described in examples A3V and A6V from EP 1 167 452 A2.

In example A3V, ethylene oxide and styrene oxide were used in the etherification. The aliphatic alcohol was 1-nonanol.

In example A6V, ethylene oxide, styrene oxide, and propylene oxide were used in the etherification. The aliphatic alcohol was 1-nonanol.

### "Compound A3V":

3375 g (23.4 mol) of 1-nonalyl alcohol and 163 g (2.3 mol) of potassium methylate were placed in a reactor. After careful flushing with high-purity nitrogen, the mixture was heated to 110 °C, and 3082 g (25.7 mol) of styrene oxide were added over the course of one hour. After a further two hours, the addition of the styrene oxide was complete, detectable from a residual content of styrene oxide which, according to GC, was < 0.1% by weight. Then, 9266.4 g (210 mol) of ethylene oxide were metered into the reactor at a rate such that the internal temperature of 120°C and the pressure of 6 bar were not exceeded. After introducing all of the ethylene oxide, the temperature was held at 115 °C until a constant manometer pressure indicated the end of the post-reaction. Finally, at 80 - 90 °C, the unreacted residual monomers were removed in vacuo. The resulting product was neutralized with the help of phosphoric acid and the water was removed by distillation, the resulting potassium phosphate was obtained by filtration together with a filtration aid. The molecular weight thereof, from the determination of the hydroxyl number for an assumed functionality of 1, was M = 635 g/mol.

635 g of the block polymer (corresponds to 1 OH equivalent) were charged to the reactor and, after adding about 50 ml of toluene, heated to 110 °C. All of the volatile fractions, in particular any water present in the product, were removed by distillation from the reaction space by applying a vacuum. Following aeration with nitrogen, the mixture was heated to 80 °C and 85 g of the liquid polyphosphoric acid, (0.25 mol of P₄O₁₀; Merck; content calculated as P₄O₁₀: ca. 85%) were added. After two hours the reaction was complete, and compound A3V was obtained.

In the ¹H-NMR spectrum, aliphatic hydroxyl group was no longer detectable.

Also, in the ³¹P-NMR, polymeric structures were no longer detectable; this was also confirmed in the molecular weight determination in the GPC as described above; no structures above 1000 g/mol were visible.

Hence, essentially only monoesters are formed with these reactants.

### "Compound A6V":

"Compound **A6V"** was prepared analogously as described for compound **A3V,** i.e. wherein in addition, after etherification of styrene oxide and ethylene oxide, 3 mol equivalents (relative to 1-nonyl alcohol) of propylene oxide are further added and etherified.

### Formulations

The following formulations were prepared (data in % by weight, pH at 20 °C), wherein:
**FAEO** stands for fatty alcohol ethoxylate,
**FAEO C₁₂₋₁₈** stands for fatty alcohol C₁₂₋₁₈ ethoxylate with 8-12 ethylene oxide units ("**EO**"),
**FAEO C₆** stands for fatty alcohol C₆ ethoxylate with 4-5 **EO,**
**APG** stands for C₈₋₁₀-alkyl polyglucoside.
**MGDA** stands for methylglycinediacetic acid (Trilon M)
**LAS** stands for linear alkylbenzene sulphate.

A star "*" means that the respective formulation is "not according to the invention"

| **Formulation** | **1₀*** | **1A** | **1B** | **1C** | **1D*** | **1E*** |
|---|---|---|---|---|---|---|
| **FAEO** | 2.0 | 2.0 | 2.0 | 2.0 | 2.0 | 2.0 |
| **APG** | 3.0 | 3.0 | 3.0 | 3.0 | 3.0 | 3.0 |
| **PE 2.1** | - | 0.6 | - | - | - | - |
| **PE 2.2** | - | - | 0.6 | - | - | - |
| **PE 2.3** | - | - | - | 0.6 | - | - |
| **A3V** | - | - | - | - | 0.6 | - |
| **A6V** | - | - | - | - | - | 0.6 |
| **MGDA** | 0.1 | 0.1 | 0.1 | 0.1 | 0.1 | 0.1 |
| Water | to 100 % | to 100 % | to 100 % | to 100 % | to 100 % | to 100 % |
| pH | 7.3 | 7.3 | 7.3 | 7.3 | 7.3 | 7.3 |

| **Formulation** | **2₀*** | **2A** | **2B** | **2C*** | **2D*** | |
|---|---|---|---|---|---|---|
| **FAEO C₁₂₋₁₈** | 2.0 | 2.0 | 2.0 | 2.0 | 2.0 | |
| **FAEO C₆** | 1.5 | 1.5 | 1.5 | 1.5 | 1.5 | |
| **LAS** | 2.5 | 2.5 | 2.5 | 2.5 | 2.5 | |
| **PE 2.1** | - | 0.6 | - | - | - | |
| **PE 2.2** | - | - | 0.6 | - | - | |
| **A3V** | - | - | - | 0.6 | - | |
| **A6V** | - | - | - | - | 0.6 | |
| Ethanol | 3.0 | 3.0 | 3.0 | 3.0 | 3.0 | |
| Water | to 100 % | to 100 % | to 100 % | to 100 % | to 100 % | |
| pH | 11.2 | 11.2 | 11.2 | 11.2 | 11.2 | |

Formulations **1A, 1B, 1C, 2A,** and **2B** contain phosphoric acid esters according to the invention.

Formulations **1D*, 1E*, 2C*, 2D*** contain phosphoric acid esters that are not according to the invention. Formulations **1₀*** and **2₀*** are blank test formulations that do not contain phosphoric acid esters.

### Shine ability

For the following test, the formulations **1A to 1E*, 2A** to **2D*, 1₀*** and **2₀*** were diluted to 1.2 % by weight in tap water with 8 °dGH ("°dGH" = "German degrees of hardness") and used as "diluted test formulation" ***1₀**** and ***2₀****, ***1A*** to ***1E*, 2A*** to ***2D*.*** 1° dGH corresponds to a total concentration of 0.1783 mmol/l of earth alkali metal cations.

In order to determine the shine increase, equally damaged surfaces are required; these were validated to defined values with a predamaging process. In order to produce targeted damage (shine reduction) on the tile (15 x 15 cm, Royal Mosa in black), factory-new tiles were damaged in a dishwashing detergent (Neodisher solution (5.7 g/l) at 70 °C for ca. 1 h. The tiles were removed from the immersion bath and rinsed for 5 seconds with distilled water and then dried horizontally for 1 h at 50 °C in a drying cabinet. Before each measurement, the tiles were wiped with ethyl acetate in order to remove dust and other adhering material until residue-free. As a result of this process, the shine was reduced from 94° to a value between 50 and 70° shine. Tiles which produced shine values below 50° were not used for the measurement.

5 ml of each diluted test formulation **1A** to ***1E*, 2A*** to ***2D*, 1₀**** and ***2₀**** were applied to such a cleaned and pretreated tile using a cleaning cloth ("Bodenwunder"), which was clamped in a plate measuring 2 x 5 cm. The cleaner solution was spread in two wiping movements and dried horizontally for at least one hour at room temperature (23 °C). Then, the shine was measured at 5 to 10 places using a shine measuring instrument (Dr. Lange shine measuring instrument). The numerical values for 60° shine values were determined and noted. Comparison with the values for the damaged, but untreated surface gave the shine increases, noted in the table, after using the corresponding formulation.

| **Formulation** | Shine value |
|---|---|
| ***1₀**** | 2.7 |
| ***1A*** | 11.9 |
| ***1B*** | 13.3 |
| ***1C*** | 12.7 |
| ***1D`*** | 2.5 |
| ***1E'*** | 2.8 |
| | |
| ***2₀**** | 6 |
| ***2A*** | 14.5 |
| ***2B*** | 13.1 |
| ***2C**** | 3.2 |
| ***2D**** | 7.2 |

The measurement results show that the formulations according to the invention (***1A, 1B, 1C, 2A, 2B***) bring about a significant shine increase compared with the controls ***1₀****, ***2₀****.

This improvement in shine ability was not observed for those formulations not in accordance with the invention (***1D****, ***1E*, 2C*, 2D****). These comparative formulations either bring about no (***1D***,* ***2C****) or a significantly smaller, negligible (***1E***, **2D****) effect.

The additives not according to the invention result in greasy, streaky or marked, nonuniform surfaces. The additives according to the invention produced an equally shiny area which made the surface also look like new again.

### Adhesion minimization as a result of repair effect

Furthermore, the adhesion on a tile (damaged or undamaged) was measured before and after applying the compositions according to the invention in a vertical and a horizontal measurement arrangement.

The results show that following treatment with the composition according to the invention, the frictional force on the damaged tile is up to 50 % less, which is an indication of the repair effect of the composition.

### Repair effect

Scanning electron micrographs were made of the surface of a damaged black tile before and after five-fold application of the diluted formulations ***2A*** and ***2B***. The micrographs clearly show the repair effect of the composition according to the invention.

### Formulation examples

Formulation examples are given below in tabular form, including the respective amount, expressed in % by weight, based on the total formulation, using the following raw materials:
**"SD100"** = TEGOTENS SD 100 - Sorbitan sesquioctanoate, Evonik Industries AG
**"D510 NC"** = Rewopol D 510 NC - Ethylhexyl sulphate, 40%, Evonik Industries AG
**"L10"** = Laureth10 - Lauryl alcohol ether with on average 10 **EO** - Evonik Industries AG
**"CC 40 B"** = Rewopol CC 40 B - blend of biodegradable ester quats, non-ionic surfactants and complexing agents, Evonik Industries AG
**"DO"** = Tegotens DO - Decamine oxide, 30%, Evonik Industries AG
**"TS 35"** = Rewocare TS 35 - Anionic blend, Evonik Industries AG
**"CQ 100"** = Rewoquat CQ 100 - Cationic/nonionic blend, Evonik Industries AG
**"KSF 40"** = Rewoteric AM KSF 40 - Cocoamphodipropionate, 40%, Evonik Industries AG
**"WE 50"** = TEGO Polish Additive WE 50 - Emulsion of avocado oil, Evonik Industries AG
**"ASL 60"** = TEGO Polish Additive ASL 60 - Emulsion of a silicone oil, Evonik Industries AG
**"SC 200"** = Rewopol SC 200 - Amphoteric/nonionic blend, Evonik Industries AG
**"DO 75"** = Rewopol SB DO 75 - Diisooctyl sulphosuccinate, 75%, Evonik Industries AG
**"NLS 28"** = Rewopol NLS 28 - Sodium lauryl ether sulphate, 28%, Evonik Industries AG
**"AM TEG"** = Rewoteric AM TEG - PEG-2 Tallow fatty betaine, 50%, Evonik Industries AG
**"T 202"** = Varonic T 202, PEG-2 tallow amines, Evonik Industries AG
**"EC 11"** = Tegotens EC 11, Terminally capped fatty alcohol, Evonik Industries AG
**"FA 30"** = Rewopol SB FA 30 - Laureth-3 sulphosuccinate, 40%, Evonik Industries AG
**"AM V"** = Rewoteric AM V - C8-10 Amphoacetate, 32%, Evonik Industries AG
**"C 60"** = TEGO Betaine C 60 - Cocamidoproylbetaine, 48%, Evonik Industries AG
**"365"** = VAROX 365 - Laurylamine oxide, 30%, Evonik Industries AG
**"U 6"** = Undeceth-6 - hexaethylene glycol monoundecyl ether (CAS.-No. 34398-01-1)
**"Cone 50"** = Tegosorb Cone 50 - 50 % non-aqueous solution of a zinc salt of ricinoleic acid
**MGDA** (Trilon M)= methylglycine diacetic acid, 40 %
**"LA 6"** = lauryl alcohol 6 ethoxylate
**"LES"** = lauryl ether sulphate
**"AM VSF"** = TEGOTENS AM VSF - sodium capryloampho-propionate
**"TPPP"** = tetrapotassium pyrophosphate
**"PGB"** = Propylene glycol n-butyl ether
**"EG"** = ethylene glycol
**"BG"** = butyl glycol
**"OT"** = terpenes from orange
**"*sec*-AS"** = sec-alkanesulphonate, 30 %
**"EMA"** = ethylmethylamine

It is possible to repeat the mixing of formulations ***1A*** to ***1E***, **2A*** to ***2D*, 1₀**** and ***2₀**** and substitute **APG** by C₁₂₋₁₆-alkyl polyglucosides. These alternative formulations may then also be employed instead of **PE 2.1, PE 2.2, PE 2.3** in the formulation examples in the following.

### Bathroom Cleaners

Formulations **3A1, 3A2, 3A3, 3A4, 3B1, 3B2, 3B3, 3B4, 3C1, 3C2, 3C3, 3C4** were mixed as set forth in the following table. The table gives the weight-% of each component, relative to the total weight of the respective formulation.

| **Formulation** | **3A1** | **3A2** | **3A3** | **3A4** | **3B1** | **3B2** | **3B3** | **3B4** | **3C1** | **3C2** | **3C3** | **3C4** |
|---|---|---|---|---|---|---|---|---|---|---|---|---|
| **SD100** | - | - | - | - | - | - | - | - | 1.0 | 1.0 | 1.0 | 1.0 |
| **D 510 NC** | - | - | - | - | - | - | - | - | 1.0 | 1.0 | 1.0 | 1.0 |
| **L10** | - | - | - | - | 1.2 | 1.2 | 1.2 | 1.2 | - | - | - | - |
| **CC 40 B** | 2.0 | 2.0 | 2.0 | 2.0 | - | - | - | - | - | - | - | - |
| NaOH | - | - | - | - | 0.4 | 0.4 | 0.4 | 0.4 | 2.0 | 2.0 | 2.0 | 2.0 |
| Citric acid | 0.5 | 0.5 | 0.5 | 0.5 | 3.0 | 3.0 | 3.0 | 3.0 | 2.5 | 2.5 | 2.5 | 2.5 |
| **PGB** | 1.0 | 1.0 | 1.0 | 1.0 | - | - | - | - | - | - | - | - |
| *iso*-propanol | 5.0 | 5.0 | 5.0 | 5.0 | - | - | - | - | - | - | - | - |
| **PE 2.1** | 0.6 | - | - | 0.2 | 0.6 | - | - | 0.2 | 0.6 | - | - | 0.2 |
| **PE 2.2** | - | 0.6 | - | 0.2 | - | 0.6 | - | 0.2 | - | 0.6 | - | 0.2 |
| **PE 2.3** | - | - | 0.6 | 0.2 | - | - | 0.6 | 0.2 | - | - | 0.6 | 0.2 |
| Water | to 100 | to 100 | to 100 | to 100 | to 100 | to 100 | to 100 | to 100 | to 100 | to 100 | to 100 | to 100 |

Further formulations may be mixed by adding prior art phosphoric acid esters, such as a mixture of compounds **A3V** and **A6V,** to each of formulations **3A1, 3A2, 3A3, 3A4, 3B1, 3B2, 3B3, 3B4, 3C1, 3C2, 3C3, 3C4,** for example in an amount of 0.2 weight-% **A3V** and 0.2 weight % **A6V.** Likewise, typical ingredients of bathroom cleaners may be added to each of formulations **3A1, 3A2, 3A3, 3A4, 3B1, 3B2, 3B3, 3B4, 3C1, 3C2, 3C3, 3C4.**

### Plastic Cleaners

Formulations **4A1, 4A2, 4A3, 4A4, 4B1, 4B2, 4B3, 4B4, 4C1, 4C2, 4C3, 4C4** were mixed as set forth in the following table. The table gives the weight-% of each component, relative to the total weight of the respective formulation.

| **Formulation** | **4A1** | **4A2** | **4A3** | **4A4** | **4B1** | **4B2** | **4B3** | **4B4** | **4C1** | **4C2** | **4C3** | **4C4** |
|---|---|---|---|---|---|---|---|---|---|---|---|---|
| **DO** | 5 | 5 | 5 | 5 | - | - | - | - | 3.3 | 3.3 | 3.3 | 3.3 |
| **TS 35** | - | - | - | - | 0.4 | 0.4 | 0.4 | 0.4 | - | - | - | - |
| **EG** | 1 | 1 | 1 | 1 | - | - | - | - | - | - | - | - |
| Citric acid | 1 | 1 | 1 | 1 | - | - | - | - | 1.2 | 1.2 | 1.2 | 1.2 |
| *iso*-propanol | - | - | - | - | 15 | 15 | 15 | 15 | 10 | 10 | 10 | 10 |
| **PE 2.1** | 0.1 | - | - | 0.03 | 0.1 | - | - | 0.03 | 0.1 | - | - | 0.03 |
| **PE 2.2** | - | 0.1 | - | 0.03 | - | 0.1 | - | 0.03 | - | 0.1 | - | 0.03 |
| **PE 2.3** | - | - | 0.1 | 0.03 | - | - | 0.1 | 0.03 | - | - | 0.1 | 0.03 |
| Water | to 100 | to 100 | to 100 | to 100 | to 100 | to 100 | to 100 | to 100 | to 100 | to 100 | to 100 | to 100 |

Further formulations may be mixed by adding prior art phosphoric acid esters, such as a mixture of compounds **A3V** and **A6V,** to each of formulations **4A1, 4A2, 4A3, 4A4, 4B1, 4B2, 4B3, 4B4, 4C1, 4C2, 4C3, 4C4,** for example in an amount of 0.1 weight-% **A3V** and 0.1 weight % **A6V.** Likewise, typical ingredients of plastic cleaners may be added to each of formulations **4A1, 4A2, 4A3, 4A4, 4B1, 4B2, 4B3, 4B4, 4C1, 4C2, 4C3, 4C4.**

### Paint Cleaner and Shampoo

Formulations **5A1, 5A2, 5A3, 5A4, 5B1, 5B2, 5B3, 5B4, 5C1, 5C2, 5C3, 5C4** were mixed as set forth in the following table. The table gives the weight-% of each component, relative to the total weight of the respective formulation.

| **Formulation** | **5A1** | **5A2** | **5A3** | **5A4** | **5B1** | **5B2** | **5B3** | **5B4** | **5C1** | **5C2** | **5C3** | **5C4** |
|---|---|---|---|---|---|---|---|---|---|---|---|---|
| **CQ 100** | 20 | 20 | 20 | 20 | - | - | - | - | - | - | - | - |
| **KSF 40** | 15 | 15 | 15 | 15 | - | - | - | - | - | - | - | - |
| **WE 50** | - | - | - | - | 4 | 4 | 4 | 4 | - | - | - | - |
| **ASL 60** | - | - | - | - | 1 | 1 | 1 | 1 | - | - | - | - |
| **SC 200** | - | - | - | - | - | - | - | - | 10 | 10 | 10 | 10 |
| **MGDA** | - | - | - | - | - | - | - | - | 6 | 6 | 6 | 6 |
| TPPP | 5 | 5 | 5 | 5 | - | - | - | - | - | - | - | - |
| Citric acid | - | - | - | - | - | - | - | - | 0.1 | 0.1 | 0.1 | 0.1 |
| **OT** | 10 | 10 | 10 | 10 | - | - | - | - | - | - | - | - |
| **BG** | 5.0 | 5.0 | 5.0 | 5.0 | - | - | - | - | - | - | - | - |
| **PE 2.1** | 0.9 | - | - | 0.3 | 0.6 | - | - | 0.2 | 0.3 | - | - | 0.1 |
| **PE 2.2** | - | 0.9 | - | 0.3 | - | 0.6 | - | 0.2 | - | 0.3 | - | 0.1 |
| **PE 2.3** | - | - | 0.9 | 0.3 | - | - | 0.6 | 0.2 | - | - | 0.3 | 0.1 |
| Water | to 100 | to 100 | to 100 | to 100 | to 100 | to 100 | to 100 | to 100 | to 100 | to 100 | to 100 | to 100 |

Further formulations may be mixed by adding prior art phosphoric acid esters, such as a mixture of compounds **A3V** and **A6V,** to each of formulations **5A1, 5A2, 5A3, 5A4, 5B1, 5B2, 5B3, 5B4, 5C1, 5C2, 5C3, 5C4,** for example in an amount of 0.1 weight-% **A3V** and 0.1 weight % **A6V.** Likewise, typical ingredients of paint cleaners and shampoos may be added to each of formulations **5A1, 5A2, 5A3, 5A4, 5B1, 5B2, 5B3, 5B4, 5C1, 5C2, 5C3, 5C4.**

### Glass Cleaner

Formulations **6A1, 6A2, 6A3, 6A4, 6B1, 6B2, 6B3, 6B4, 6C1, 6C2, 6C3, 6C4** were mixed as set forth in the following table. The table gives the weight-% of each component, relative to the total weight of the respective formulation.

| **Formulation** | **6A1** | **6A2** | **6A3** | **6A4** | **6B1** | **6B2** | **6B3** | **6B4** | **6C1** | **6C2** | **6C3** | **6C4** |
|---|---|---|---|---|---|---|---|---|---|---|---|---|
| **DO** | 0.6 | 0.6 | 0.6 | 0.6 | 7.5 | 7.5 | 7.5 | 7.5 | - | - | - | - |
| **DO75** | 15 | 15 | 15 | 15 | - | - | - | - | - | - | - | - |
| **NLS 28** | - | - | - | - | 1.5 | 1.5 | 1.5 | 1.5 | - | - | - | - |
| **TS 35** | - | - | - | - | - | - | - | - | 1.0 | 1.0 | 1.0 | 1.0 |
| **SD 100** | - | - | - | - | - | - | - | - | 0.2 | 0.2 | 0.2 | 0.2 |
| *iso*-propanol | 15.0 | 15.0 | 15.0 | 15.0 | - | - | - | - | 15.0 | 15.0 | 15.0 | 15.0 |
| **MGDA** | - | - | - | - | - | - | - | - | 2.0 | 2.0 | 2.0 | 2.0 |
| ***sec*-AS** | 0.4 | 0.4 | 0.4 | 0.4 | - | - | - | - | - | - | - | - |
| **PE 2.1** | 0.1 | - | - | 0.033 | 0.9 | - | - | 0.3 | 0.2 | - | - | 0.066 |
| **PE 2.2** | - | 0.1 | - | 0.033 | - | 0.9 | - | 0.3 | - | 0.2 | - | 0.066 |
| **PE 2.3** | - | - | 0.1 | 0.033 | - | - | 0.9 | 0.3 | - | - | 0.2 | 0.066 |
| Water | to 100 | to 100 | to 100 | to 100 | to 100 | to 100 | to 100 | to 100 | to 100 | to 100 | to 100 | to 100 |

Further formulations may be mixed by adding prior art phosphoric acid esters, such as a mixture of compounds **A3V** and **A6V**, to each of formulations **6A1, 6A2, 6A3, 6A4, 6B1, 6B2, 6B3, 6B4, 6C1, 6C2, 6C3, 6C4,** for example in an amount of 0.1 weight-% **A3V** and 0.1 weight % **A6V.** Likewise, typical ingredients of glass cleaners may be added to each of formulations **6A1, 6A2, 6A3, 6A4, 6B1, 6B2, 6B3, 6B4, 6C1, 6C2, 6C3, 6C4.**

### Toilet Cleaner

Formulations **7A1, 7A2, 7A3, 7A4, 7B1, 7B2, 7B3, 7B4, 7C1, 7C2, 7C3, 7C4** were mixed as set forth in the following table. The table gives the weight-% of each component, relative to the total weight of the respective formulation.

| **Formulation** | **7A1** | **7A2** | **7A3** | **7A4** | **7B1** | **7B2** | **7B3** | **7B4** | **7C1** | **7C2** | **7C3** | **7C4** |
|---|---|---|---|---|---|---|---|---|---|---|---|---|
| **AM TEG** | 1.5 | 1.5 | 1.5 | 1.5 | - | - | - | - | - | - | - | - |
| **CQ 100** | 3.0 | 3.0 | 3.0 | 3.0 | - | - | - | - | - | - | - | - |
| T202 | 1.5 | 1.5 | 1.5 | 1.5 | - | - | - | - | 5 | 5 | 5 | 5 |
| **EC 11** | - | - | - | - | 1.2 | 1.2 | 1.2 | 1.2 | - | - | - | - |
| **DO** | - | - | - | - | 2 | 2 | 2 | 2 | - | - | - | - |
| NaCl | 0.6 | 0.6 | 0.6 | 0.6 | 0.6 | 0.6 | 0.6 | 0.6 | 0.6 | 0.6 | 0.6 | 0.6 |
| H₃PO₄ | 10 | 10 | 10 | 10 | 5 | 5 | 5 | 5 | - | - | - | - |
| Citric acid | - | - | - | - | 10 | 10 | 10 | 10 | 8 | 8 | 8 | 8 |
| **PE 2.1** | 0.9 | - | - | 0.3 | 0.6 | - | - | 0.2 | 0.6 | - | - | 0.2 |
| **PE 2.2** | - | 0.9 | - | 0.3 | - | 0.6 | - | 0.2 | - | 0.6 | - | 0.2 |
| **PE 2.3** | - | - | 0.9 | 0.3 | - | - | 0.6 | 0.2 | - | - | 0.6 | 0.2 |
| Water | to 100 | to 100 | to 100 | to 100 | to 100 | to 100 | to 100 | to 100 | to 100 | to 100 | to 100 | to 100 |

Further formulations may be mixed by adding prior art phosphoric acid esters, such as a mixture of compounds **A3V** and **A6V**, to each of formulations **7A1, 7A2, 7A3, 7A4, 7B1, 7B2, 7B3, 7B4, 7C1, 7C2, 7C3, 7C4,** for example in an amount of 0.1 weight-% **A3V** and 0.1 weight % **A6V.** Likewise, typical ingredients of toilet cleaners may be added to each of formulations **7A1, 7A2, 7A3, 7A4, 7B1, 7B2, 7B3, 7B4, 7C1, 7C2, 7C3, 7C4.**

### All-purpose Cleaner

Formulations **8A1, 8A2, 8A3, 8A4, 8B1, 8B2, 8B3, 8B4, 8C1, 8C2, 8C3, 8C4** were mixed as set forth in the following table. The table gives the weight-% of each component, relative to the total weight of the respective formulation.

| **Formulation** | **8A1** | **8A2** | **8A3** | **8A4** | **8B1** | **8B2** | **8B3** | **8B4** | **8C1** | **8C2** | **8C3** | **8C4** |
|---|---|---|---|---|---|---|---|---|---|---|---|---|
| **FA 30** | 12 | 12 | 12 | 12 | - | - | - | - | - | - | - | - |
| **AM V** | 8 | 8 | 8 | 8 | - | - | - | - | - | - | - | - |
| **SC 200** | - | - | - | - | 6 | 6 | 6 | 6 | - | - | - | - |
| **EC 11** | - | - | - | - | - | - | - | - | 1.2 | 1.2 | 1.2 | 1.2 |
| **DO** | - | - | - | - | - | - | - | - | 2 | 2 | 2 | 2 |
| **NLS 28** | 28.5 | 28.5 | 28.5 | 28.5 | - | - | - | - | - | - | - | - |
| **U 6** | 2 | 2 | 2 | 2 | - | - | - | - | - | - | - | - |
| **MGDA** | - | - | - | - | 7.5 | 7.5 | 7.5 | 7.5 | - | - | - | - |
| H₃PO₄ | - | - | - | - | - | - | - | - | 5 | 5 | 5 | 5 |
| Citric acid | 0.5 | 0.5 | 0.5 | 0.5 | - | - | - | - | 10 | 10 | 10 | 10 |
| **PE 2.1** | 1.2 | - | - | 0.4 | 0.3 | - | - | 0.1 | 0.6 | - | - | 0.2 |
| **PE 2.2** | - | 1.2 | - | 0.4 | - | 0.3 | - | 0.1 | - | 0.6 | - | 0.2 |
| **PE 2.3** | - | - | 1.2 | 0.4 | - | - | 0.3 | 0.1 | - | - | 0.6 | 0.2 |
| Water | to 100 | to 100 | to 100 | to 100 | to 100 | to 100 | to 100 | to 100 | to 100 | to 100 | to 100 | to 100 |

Further formulations may be mixed by adding prior art phosphoric acid esters, such as a mixture of compounds **A3V** and **A6V,** to each of formulations **8A1, 8A2, 8A3, 8A4, 8B1, 8B2, 8B3, 8B4, 8C1, 8C2, 8C3, 8C4,** for example in an amount of 0.1 weight-% **A3V** and 0.1 weight % **A6V.** Likewise, typical ingredients of all-purpose cleaners may be added to each of formulations **8A1, 8A2, 8A3, 8A4, 8B1, 8B2, 8B3, 8B4, 8C1, 8C2, 8C3, 8C4.**

### Dishwashing detergent

Formulations **9A1, 9A2, 9A3, 9A4, 9B1, 9B2, 9B3, 9B4** were mixed as set forth in the following table. The table gives the weight-% of each component, relative to the total weight of the respective formulation.

| **Formulation** | **9A1** | **9A2** | **9A3** | **9A4** | **9B1** | **9B2** | **9B3** | **9B4** |
|---|---|---|---|---|---|---|---|---|
| **C 60** | 4.2 | 4.2 | 4.2 | 4.2 | - | - | - | - |
| **365** | - | - | - | - | 11.5 | 11.5 | 11.5 | 11.5 |
| **LES** | 20.0 | 20.0 | 20.0 | 20.0 | 18.5 | 18.5 | 18.5 | 18.5 |
| NaCl | 1.3 | 1.3 | 1.3 | 1.3 | 0.8 | 0.8 | 0.8 | 0.8 |
| Citric acid | 0.2 | 0.2 | 0.2 | 0.2 | - | - | - | - |
| **PE 2.1** | 1.2 | - | - | 0.4 | 1.2 | - | - | 0.4 |
| **PE 2.2** | - | 1.2 | - | 0.4 | - | 1.2 | - | 0.4 |
| **PE 2.3** | - | - | 1.2 | 0.4 | - | - | 1.2 | 0.4 |
| Water | to 100 | to 100 | to 100 | to 100 | to 100 | to 100 | to 100 | to 100 |

Further formulations may be mixed by adding prior art phosphoric acid esters, such as a mixture of compounds **A3V** and **A6V,** to each of formulations **9A1, 9A2, 9A3, 9A4, 9B1, 9B2, 9B3, 9B4,** for example in an amount of 0.1 weight-% **A3V** and 0.1 weight % **A6V.** Likewise, typical ingredients of all-purpose cleaners may be added to each of formulations **9A1, 9A2, 9A3, 9A4, 9B1, 9B2, 9B3, 9B4.**

### Bathroom cleaner with odor absorber

Formulations **10A1, 10A2, 10A3, 10A4** were mixed as set forth in the following table. The table gives the weight-% of each component, relative to the total weight of the respective formulation.

| **Formulation** | **10A1** | **10A2** | **10A3** | **10A4** |
|---|---|---|---|---|
| **DO** | 3.3 | 3.3 | 3.3 | 3.3 |
| **Cone 50** | 1 | 1 | 1 | 1 |
| Citric acid | 0.2 | 0.2 | 0.2 | 0.2 |
| **PE 2.1** | 0.5 | - | - | 0.167 |
| **PE 2.2** | - | 0.5 | - | 0.167 |
| **PE 2.3** | - | - | 0.5 | 0.167 |
| Water | to 100 | to 100 | to 100 | to 100 |

Further formulations may be mixed by adding prior art phosphoric acid esters, such as a mixture of compounds **A3V** and **A6V,** to each of formulations **10A1, 10A2, 10A3, 10A4,** for example in an amount of 0.1 weight-% **A3V** and 0.1 weight % **A6V.** Likewise, typical ingredients of bathroom cleaners with odor absorbers may be added to each of formulations **10A1, 10A2, 10A3, 10A4.**

### Floor cleaner

Formulations **11A1, 11A2, 11A3, 11A4, 11B1, 11B2, 11B3, 11B4, 11C1, 11C2, 11C3, 11C4, 11D1, 11D2, 11D3, 11D4,** were mixed as set forth in the following table. The table gives the weight-% of each component, relative to the total weight of the respective formulation.

| **Formulation** | **11A1** | **11A2** | **11A3** | **11A4** | **11B1** | **11B2** | **11B3** | **11B4** | **11C1** | **11C2** | **11C3** | **11C4** | **11D1** | **11D2** | **11D3** | **11D4** |
|---|---|---|---|---|---|---|---|---|---|---|---|---|---|---|---|---|
| **MGDA** | 4 | 4 | 4 | 4 | 6 | 6 | 6 | 6 | - | - | - | - | - | - | - | - |
| **LA 6** | 0.6 | 0.6 | 0.6 | 0.6 | - | - | - | - | - | - | - | - | - | - | - | - |
| **SD 100** | 0.4 | 0.4 | 0.4 | 0.4 | - | - | - | - | - | - | - | - | - | - | - | - |
| **AM VSF** | 2.4 | 2.4 | 2.4 | 2.4 | - | - | - | - | - | - | - | - | - | - | - | - |
| **SC 200** | - | - | - | - | 10 | 10 | 10 | 10 | - | - | - | - | - | - | - | - |
| **DO 75** | - | - | - | - | - | - | - | - | 5 | 5 | 5 | 5 | 5 | 5 | 5 | 5 |
| Na₂CO₃ | 3 | 3 | 3 | 3 | 2 | 2 | 2 | 2 | - | - | - | - | - | - | - | - |
| **EMA** | | - | - | - | - | - | - | - | 0.06 | 0.06 | 0.06 | 0.06 | 0.06 | 0.06 | 0.06 | 0.06 |
| *iso*-propanol | - | - | - | - | - | - | - | - | 1 | - | - | 0.34 | 1 | - | - | 0.34 |
| **PE 2.1** | 0.5 | - | - | 0.17 | 1 | - | - | 0.34 | - | 1 | - | 0.34 | - | 1 | - | 0.34 |
| **PE 2.2** | - | 0.5 | - | 0.17 | - | 1 | - | 0.34 | - | - | 1 | 0.34 | - | - | 1 | 0.34 |
| **PE 2.3** | - | - | 0.5 | 0.17 | - | - | 1 | 0.34 | 1 | - | - | 0.34 | 1 | - | - | 0.34 |
| Water | to 100 | to 100 | to 100 | to 100 | to 100 | to 100 | to 100 | to 100 | to 100 | to 100 | to 100 | to 100 | to 100 | to 100 | to 100 | to 100 |

Further formulations may be mixed by adding prior art phosphoric acid esters, such as a mixture of compounds **A3V** and **A6V,** to each of formulations **11A1, 11A2, 11A3, 11A4, 11B1, 11B2, 11B3, 11B4, 11C1, 11C2, 11C3, 11C4, 11D1, 11D2, 11D3, 11D4,** for example in an amount of 0.1 weight-% **A3V** and 0.1 weight % **A6V.** Likewise, typical ingredients of floor cleaner may be added to each of formulations **11A1, 11A2, 11A3, 11A4, 11B1, 11B2, 11B3, 11B4, 11C1, 11C2, 11C3, 11C4, 11D1, 11D2, 11D3, 11 D4.**

## Claims

1. A phosphoric acid ester according to general formula **(I)** or a salt thereof 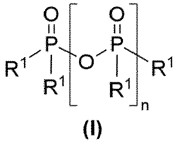
where n is an integer and n = 0 to 4, and
where the residues R¹ are selected from the group consisting of hydroxy and residues according to general formula **(I')**, 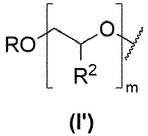
with the proviso that at least one of the residues R¹ which are comprised by the phosphoric acid ester according to general formula **(I)** is a residue according to general formula **(I')**,
and where the residues R¹ according to general formula **(I')** which are comprised by the phosphoric acid ester according to general formula **(I)** may be identical or different from each other,
where m is an integer and m = α + β + γ,
wherein
α is an integer and α = 3 to 20, preferably 4 to 18, and
β is an integer and β = 0 to 10, preferably 0 to 8, more preferred 0 to 5, even more preferred 0 to 3 and most preferred 0, and
γ is an integer and γ = 0 to 10, preferably 0 to 8, more preferred 0 to 5, even more preferred 0 to 3 and most preferred 0, and
and wherein α of the residues R² that are comprised by the residue according to general formula **(I')** are each hydrogen,
and wherein β of the residues R² that are comprised by the residue according to general formula **(I')** are each methyl,
and wherein γ of the residues R² that are comprised by the residue according to general formula **(I')** are each ethyl,
and where R is a mono- or polycyclic aromatic radical with 3 to 36, more preferably 6 to 36, more preferably 6 to 30, more preferably 6 to 24, even more preferably 6 to 20, even more preferably 6 to 16, even more preferably 6 to 10 aromatic carbon atoms, which optionally contains hetero atoms,
wherein one or more of the aromatic carbon atoms of the mono- or polycyclic aromatic radical may be substituted with a hydrocarbon radical having 1 to 24, preferably 1 to 18, more preferably 1 to 15, carbon atoms, wherein the hydrocarbon radical is preferably selected from the group consisting of alkyl, alkenyl, aryl, aralkyl, alkaryl.

2. The phosphoric acid ester or its salt according to Claim 1, wherein R is selected from the group consisting of
- a phenyl radical,
- a naphthyl radical,
- a naphthyl radical, which is substituted with at least one, preferably one to three, more preferably one or two, even more preferably one, radical(s) A_{N}, wherein the radicals A_{N} are the same or different from each other,
and wherein each radical A_{N} is a hydrocarbon radical with 1 to 24 carbon atoms, preferably 4 to 15 carbon atoms, and wherein each radical A_{N} is preferably selected from the group consisting of alkyl, alkenyl, aryl, aralkyl, alkaryl,
- a phenyl radical, which is substituted with at least one, preferably one to five, more preferably one to four, even more preferably one to three, even more preferably one or two, even more preferably one, radical(s) A_{P},
wherein the radicals A_{P} are the same or different from each other,
and wherein each radical A_{P} is a hydrocarbon radical with 1 to 24 carbon atoms, preferably 4 to 15 carbon atoms, wherein the hydrocarbon radical is preferably selected from the group consisting of alkyl, alkenyl, aryl, aralkyl, alkaryl, more preferably alkenyl, alkaryl.

3. The phosphoric acid ester or its salt according to Claim 2, wherein R is a radical selected from the group consisting of formulae **(II), (III)**, **(IV),** wherein 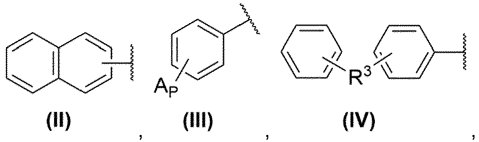
wherein A_{P} is an alkyl radical with 1 to 24 carbon atoms, preferably 4 to 15 carbon atoms, or an alkenyl radical with 1 to 24 carbon atoms, preferably 4 to 15 carbon atoms, wherein the alkenyl radical preferably comprises one to three double bonds,
wherein R³ is a divalent, linear or branched, preferably linear, hydrocarbon radical, most preferred an alkylene group with 1 to 6 preferably 1 to 3 carbon atoms or an alkenylene group with 2 to 6, preferably 2 or 3 carbon atoms.

4. The phosphoric acid ester or its salt according to Claim 3, wherein R is selected from the group consisting of 2-naphthyl, 4-cumylphenyl, cardanol, preferably cardanol obtained from cashew nut shell liquid.

5. A mixture comprising at least two, preferably at least three, even more preferably at least four, even more preferably at least five, even more preferably at least ten, even more preferably at least twenty, even more preferably at least a hundred, different phosphoric acid esters or theirs salts according to one of Claims 1 to 4.

6. A mixture according to Claim 5, wherein the radicals R comprised by at least two, preferably at least three, preferably at least four of the phosphoric acid esters or their salts in the mixture are different from each other.

7. A process for preparing at least one phosphoric acid ester or its salt according to one of Claims 1 to 4 comprising the steps of:
A) providing at least one alcohol R-OH, where R is defined as in Claims 1 to 4,
B) reacting ethylene oxide and optionally at least one further reactant selected from propylene oxide, butylene oxide, with the alcohol R-OH, wherein the molar ratio of the amount of ethylene oxide employed in step B) to the amount of all alcohols R-OH provided in step A) is in the range of from 3 : 1 to 20 :1, preferably of from 4 : 1 to 18 : 1,
wherein the reaction in step B) is preferably carried out at a temperature in a range of from 80 °C to 180 °C, preferably of from 100 °C to 160 °C, more preferably of from 110 °C to 150 °C, even more preferably of from 110 °C to 140 °C,
wherein the reaction in step B) is preferably carried out at a pressure in a range of from 0.5 bar to 12.0 bar, preferably of from 0.6 bar to 10.0 bar, more preferably of from 0.8 bar to 8.0 bar, even more preferably of from 0.8 bar to 6.0 bar,
wherein in those cases where propylene oxide is employed as further reactant in step B), the molar ratio of the amount of propylene oxide employed in step B) to the amount of all alcohols R-OH provided in step A) is in the range of from > 0 : 1 to 10 :1, preferably of from 0.001 : 1 to 8 : 1, preferably of from 0.01 : 1 to 5 : 1, preferably of from 0.1 : 1 to 3 : 1,
wherein in those cases where butylene oxide is employed as further reactant in step B), the molar ratio of the amount of butylene oxide employed in step B) to the amount of all alcohols R-OH provided in step A) is in the range of from > 0 : 1 to 10 :1, preferably of from 0.001 : 1 to 8 : 1, preferably of from 0.01 : 1 to 5 : 1, preferably of from 0.1 : 1 to 3 : 1,
C) reacting at least one polyphosphoric acid H_{q+2}P_{q}O_{3q+1}, wherein q is an integer and q ≥ 2, preferably q = 2 to 100, more preferably q = 2 to 10, with the reaction mixture obtained in step B),
wherein the molar ratio of the amount of all PzOs equivalents in the polyphosphoric acids employed in step C) to the amount of all alcohols R-OH provided in step A) is in the range of from 0.1 : 1 to 1 :1, preferably of from 0.1 : 1 to 0.5 : 1, more preferably of from 0.2 : 1 to 0.3 : 1,
wherein the reaction in step C) is preferably carried out at a temperature in a range of from 50 °C to 130 °C, more preferably in the range of from 60 °C to 110 °C, even more preferably in the range of from 70 °C to 100 °C,
wherein the reaction in step C) is preferably carried out at a pressure in a range of from 0.4 bar to 1.2 bar, preferably in a range of from 0.6 bar to 1 bar,
so that at least one phosphoric acid ester is obtained,
D) optionally purifying the at least one phosphoric acid ester.

8. The process according to Claim 7, wherein said process is carried out water-free and/or solvent-free.

9. A formulation, preferably a cleaning and/or care formulation, comprising at least one phosphoric acid ester according to one of Claims 1 to 4, preferably comprising a mixture according to Claim 5 or 6.

10. The formulation according to Claim 9, wherein the amount of all phosphoric acid esters according to formula **(I)** is in a range of from 0.00001 % by weight to 2.5 % by weight, particularly preferably in a range of from 0.1 % by weight to 1.2 % by weight, where the % by weight refers to the total weight of the formulation.

11. A formulation according to Claim 9 or 10, **characterized in that** it is an aqueous formulation.

12. A method of treating an article, said method comprising applying at least one phosphoric acid ester according to one of Claims 1 to 4 or at least one formulation according to one of Claims 9 to 11 to a surface of said article.

13. Use of at least one phosphoric acid ester according to one of Claims 1 to 4 or of one or more formulations according to one of Claims 9 to 11 to treat a surface of an article and/or in domestic appliances such as washing machines, dryers, dishwashers, preferably for generating shine on a surface.

14. Use according to Claim 13, **characterized in that** the surface is a hard surface, preferably a surface of a vehicle, a watercraft, an aeroplane, a window pans and sill, a shower divider, a flooring, such as a carpet, a tile, a laminate, a parquet, a cork flooring, marble, stone and fine stoneware floors, sinks made from ceramic or stainless steel, a household ceramic such as a toilet, a wash basin, a bidet, a shower tray, a bathtub, a door handle, a fitting, a surface of furniture such as a table, a chair, a bench, a worktop, a window, a pot and a pan, crockery and cutlery, a surface of tools such as of a surgical instrument, a vacuum cleaner, an engine, a pipelines, a tank and a device for transportation, processing and storage in food processing.
